Europäisches Patentamt

European Patent Office

Office européen des brevets

(19)

(11) Veröffentlichungsnummer: **0 448 680 B1**

## (12) EUROPÄISCHE PATENTSCHRIFT

(45) Veröffentlichungstag der Patentschrift: **03.08.94**

(51) Int. Cl.5: **G01V 1/20**

(21) Anmeldenummer: **90915414.8**

(22) Anmeldetag: **15.10.90**

(86) Internationale Anmeldenummer:
**PCT/DE90/00785**

(87) Internationale Veröffentlichungsnummer:
**WO 91/06017 (02.05.91 91/10)**

(54) **RICHTSENSOR FÜR BODENSCHALL.**

(30) Priorität: **18.10.89 DE 3934745**

(43) Veröffentlichungstag der Anmeldung:
**02.10.91 Patentblatt 91/40**

(45) Bekanntmachung des Hinweises auf die
Patenterteilung:
**03.08.94 Patentblatt 94/31**

(84) Benannte Vertragsstaaten:
**ES FR GB IT**

(56) Entgegenhaltungen:
**US-A- 2 406 014**
**US-A- 3 573 723**
**US-A- 3 803 543**
**US-A- 4 300 220**

(73) Patentinhaber: **WASAGCHEMIE Sythen GmbH**
**Werkstrasse 111**
**D-45721 Haltern(DE)**

Patentinhaber: **Baule, Heinrich, Prof. Dr. rer.**
**nat.**
**Am Waldschlösschen 13**
**D-44795 Bochum(DE)**

(72) Erfinder: **BAULE, Heinrich**
**Am Waldschlösschen 13**
**D-4630 Bochum 1(DE)**

(74) Vertreter: **Patentanwälte Ostriga & Sonnet**
**Postfach 20 16 53**
**D-42216 Wuppertal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 448 680 B1

**Beschreibung**

Die Erfindung betrifft einen Richtsensor für Bodenschall entsprechend dem Patentanspruch 1. Hiernach ist ein seismischer Richtsensor für Bodenschall bekannt, welcher eine mindestens einer ersten Ebene zugeordnete, elektrische Ausgangssignale liefernde Geophonanordnung ausgeprägter Richtcharakteristik besitzt, welche in mindestens zwei Umfangswinkelpositionen jeweils ein Ausgangssignal erzeugt und diese beiden Ausgangssignale eine entgegengesetzte Phasenanlage aufweisen. Der bekannte Richtseonsor ist beschrieben in einem Lehrbuch von E. F. SAWARENSKY und D. D. KIRNOS: "Elemente der Seismologie und Seismometrie", Seiten 339-344, erschienen im Jahr 1960, im folgenden kurz "SAWARENSKY und KIRNOS" genannt. Der bekannte Richtsensor arbeitet so, daß bei unterschiedlichen Umfangswinkelpositionen seiner radialen Längsachse erhaltene, miteinander zu vergleichende, elektrische Schwingungs-Meßsignale mit der Richtung eines seismischen Strahls korrelieren, die quer zur Längsachse des sich in seiner neutralen Umfangswinkelposition befindlichen unwirksamen Geophons verläuft.

Richtsensoren für Bodenschall werden insbesondere im Niederfrequenzbereich unter ca. 1000 Hz und im Infraschallbereich unter ca. 25 Hz zur Ortung künstlicher und natürlicher seismischer Quellen benötigt. Dazu gehören z.B. die Lokalisierung des Ortes von Gewinnungssprengungen aller Art unter und über Tage einschließlich der seismischen Lagerstättenerkundung und der Flözwellenseismik, von Rammen, Maschinen und Fahrzeugen, von Erdbeben, Gebirgsschlagen, Gasexplosionen und Klopfzeichen Verschütteter ebenso wie Bodenerschütterungen durch Luftschallanregung.

Die besonders wichtigen Parameter für die Ortsbestimmung eines seismischen Herdes sind das Azimut $\alpha$ und der Emergenz- oder Auftauchwinkel $\epsilon$ des seismischen Strahls am Beobachtungsort.

Abweichend vom eingangs beschriebenen Stand der Technik dieser Gattung (SAWARENSKY und KIRNOS), werden in der Erdbebenseismik derzeit bevorzugt sogenannte Arrays verwandt (s. H.-P. HARJES und M. HENGER: "Array-Seismologie" in Zeitschrift für Geophysik 1973 Band 39 Heft 6 Seite 865 ff., im folgenden kurz "HARJES und HENGER" genannt). Die Array-Seismologie bedient sich Verbundsysteme flächenhaft angeordneter Seismometer, die je nach Aufgabe, z.B. für die Ortung von Nah- und Fernbeben oder für die Detektion oder Verifikation nuklearer Explosionen, in unterschiedlichen Konfigurationen angeordnet sind. Derartige Konfigurationen bilden beispielsweise eine L-, eine Kreuz-, eine Dreiecks- oder neuerdings auch eine Kreisanordnung (s.a. Veröffentlichung des Royal Norwegian Ministry of Foreign Affairs, NORSAR Norwegian Seismic Array "Seismological Verification of a Comprehensive Nuclear Test Ban" Seiten 4-11).

Derartige Arrays sind in jeder Beziehung aufwendig, zumal deren Ausdehnung sich über einige Kilometer (Kleinarray) oder über mehrere einhundert Kilometer (Großarray) erstrecken kann.

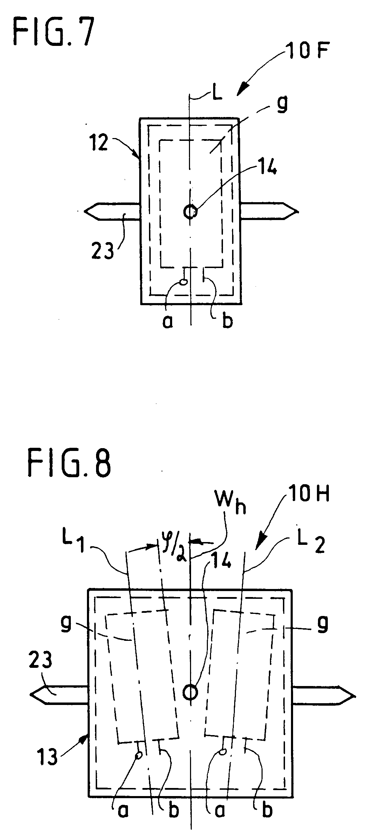

Bei der Array-Seismologie beruht die Ermittlung des Azimuts des seismischen Strahls im wesentlichen auf der Messung der unterschiedlichen Ankunftszeiten der Welle an den einzelnen Seismometern. Diese Vorgehensweise wird "Positions-Korrelationsmethode" genannt (s.a.a.O. bei HARJES und HENGER S. 880 ff. insbesondere in Verbindung mit Abb. 7). Mit Hilfe digitaler Meß- und Filtertechniken und speziellen Auswerteverfahren (beamforming) wird eine Winkelgenauigkeit des Azimuts $\alpha$ von $\pm\ 5°$, manchmal bis zu $\pm\ 3°$, erreicht.

Von der DE-C2- 35 31 230 ist eine Einrichtung zur Detektion von Betriebsgeräuschen eines Fahrzeugs od.dgl. bekannt, welche eine Empfangsanlage zum Bilden von Richtcharakteristiken darstellt. Hierbei ist eine Detektionsanzeigeeinheit von einem Winkelgenerator ansteuerbar, dessen Winkelausgangssignal Peilungen zugeordnet sind.

Von einer Fahrzeugerfassungsvorrichtung mit diesbezüglichem Verfahren zur Erfassung einer Fahrzeugbewegung ist es bekannt (DE-A1- 35 19 531), entlang des Fahrzeugweges zwei voneinander distanzierte Geophone anzuordnen. Diese beiden Geophone sind mit einer Einrichtung zum Erfassen der relativen Phasenbeziehung von zwei seismischen Signalen wirkungsverbunden, die gleichzeitig an den beiden Geophonen empfangen werden.

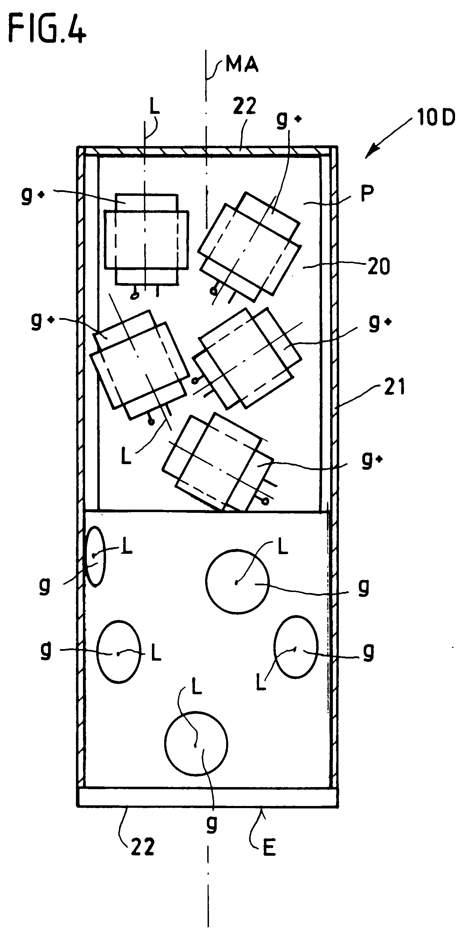

Aus der Zeitschrift "Deutsche Akad. der Wissensch.", Berlin, Veröffentlichung des Zentralinstituts für Erdbebenforschung in Jena 1949, Heft 51 Seiten 63-98 (s. insbesondere Seite 67 Abb. 4) dienen Summen- und Differenzmessung an zwei Empfängern der Kalibrierung der einzelnen Geophone und der Bestimmung der Richtcharakteristik eines Einzelempfängers.

In der USA- 26 14 166 ist eine Dreikomponenten-Geophonanordung beschrieben, bei der die Raumresultierende aus den unterschiedlichen Amplituden der Signale von drei Geophonen ermittelt wird.

In der DE-A- 304 317 schließlich ist die seit langer Zeit übliche seismologische Richtungsbestimmung beschrieben, wonach aus den Amplituden von zwei unter einem rechten Winkel horizontal angeordneten Seismometern die resultierende Richtung bestimmt wird.

Von der Array-Seismologie und den hiermit verbundenen immens aufwendigen apparativen Einrichtungen unterscheidet sich der von SAWARENSKY und KIRNOS mit dem eingangs beschriebenen bekannten Richtsensor dieser Gattung eingeschlagene Weg erheblich.

Der bekannte Richtsensor bedient sich der Azimutal-Korrelation. Dieses Meßverfahren besteht darin, daß die Phase und die Amplitude der seismischen Wellen in Abhängigkeit vom Azimut $\alpha$ der Schwingungsrichtung mehrerer Horizontalseismometer an einem Meßpunkt beobachtet wird. Diese Horizontalseismometer sind im Unterschied zu den Einrichtungen der aufwendigen Array-Seismologie auf einem Raum mit wenigen Dezimetern Quererstreckung konzentriert. SAWARENSKY und KIRNOS betrieben die seismologischen Aufzeichnungen mit sechs bis sieben Horizontal-Seismometern (s. SAWARENSKY und KIRNOS S. 341 Abb. 15). Hierbei ändert sich die Amplitude A des von einem Geophon erzeugten Schwingungs-Meßsignals auf der Registrierung beim Übergang von einem Kanal zu anderen nach einem Kosinusgesetz:

$$A = A_{max} \cos (\beta - \alpha).$$

Hierbei ist $\beta$ das Azimut der Schwingungsrichtung des Seismometers für den betreffenden Kanal und $\alpha$ das Azimut der Bodenschwingungen. Also hat die Kurve, die die Abhangigkeit der Empfindlichkeit des Kanals von seinem Azimut $\beta$ wiedergibt, das sogenannte Richtungsdiagramm des Kanals, die Form einer Kosinuslinie, oder - in Polarkoordinaten dargestellt - die Form eines Kreises oder Doppelkreises. Dabei gilt

$$\beta = \alpha \quad A = A_{max},$$
$$\beta = \alpha + \tfrac{\pi}{2} \quad A = 0,$$
$$\beta = \alpha + \pi \quad A = -A_{max}.$$

Für die Longitudinalwellen $\overline{P}$ werden die registrierten Amplituden derjenigen Apparate (Geophone) am größten, bei denen die Azimute ihre Achsen mit dem Azimut des seismischen Strahls ($\alpha$) übereinstimmen.

Das Richtungsdiagramm einer einfachen azimutalen Anordnung und die zugehörige Registrierung einfacher Wellen (z.B. von $\overline{P}$) zeigen SAWARENSKY und KIRNOS auf S. 341 Abb. 16.

Auf diese Weise ist aus der Registrierung der Longitudinalen P-Wellen das Azimut $\alpha$ des seismischen Strahls leicht zu bestimmen. $\alpha$ entspricht dem Azimut $\beta$ des Kanals, dessen Amplitude den Maximalwert aufweist, oder es liegt senkrecht zu jenem $\beta$ (d.h. $\beta = \tfrac{\pi}{2} + \alpha$), für das A = 0 ist. Diese Zweideutigkeit wird durch Verwendung eines Vertikalseismographen beseitigt. Mit Hilfe einer solchen Anordnung kann man $\alpha$ etwas genauer bestimmen als mittels der gewöhnlichen Dreikomponentenanordnung, da eine größere Anzahl von Projektionen verwendet wird.

Eine gewisse Verbesserung der Azimut-Bestimmung sehen SAWARENSKY und KIRNOS in Azimutalanordnungen mit geneigten Seismometern, die so aufgestellt werden, daß in den Registrierungen aller Meßkanäle keine Phasenverschiebung um $\pi$ auftritt und allein die Amplituden zu einer sicheren Korrelation ausreichen sollen (s. SAWARENSKY und KIRNOS S. 342, 343 Abb. 17-19). Hierbei ergibt sich der scheinbare Austrittswinkel $\epsilon$ aus dem Verhältnis der maximalen Amplitude $A_{max}$ zur minimalen Amplitude $A_{min}$ im Richtungsdiagramm. Hierbei gilt (s. SAWARENSKY und KIRNOS S. 343 in Verbindung mit S. 342 Abb. 18):

$$\frac{A_{max}}{A_{min}} = \frac{\cos (\varepsilon - \psi)}{\cos [\pi - (\varepsilon + \psi)]} = - \frac{\cos (\varepsilon - \psi)}{\cos (\varepsilon + \psi)},$$

wenn $\psi$, der Neigungswinkel des Apparats gegen den Horizont, die Bedingung $\psi > \tfrac{\pi}{2} - \epsilon$ erfüllt.

Die Anwendung des eingangs beschriebenen Richtsensors dieser Gattung (SAWARENSKY und KIRNOS) wurde infolge des großen Verbrauchs an Foto-Registrierpapier und dem notwendigerweise häufigen Wechsel bei stationären Beobachtungen eingeschränkt.

Der bekannte Richtsensor (SAWARENSKY und KIRNOS) besticht im Vergleich zu den vorerwähnten seismologischen Arrays durch seine kleine Bauform, die in Verbindung mit einer großen Mobilität und einem relativ geringen Installationsaufwand die Meßaufnahme von jeweils einem Punkt ermöglicht. Der bekannte Richtsensor (SAWARENSKY und KIRNOS) wird aber hinsichtlich seiner Handhabungsweise und der sich hiermit verbindenden nicht so genauen Ablesbarkeit als verbesserungsbedürftig empfunden. Zugleich wäre eine sich aus einer verbesserten Handhabungsweise resultierende noch einfachere Bauform wünschenswert.

Ausgehend von dem eingangs beschriebenen bekannten Richtsensor dieser Gattung (SAWARENSKY UND KIRNOS), liegt der Erfindung die Aufgabe zugrunde, den bekannten Richtsensor hinsichtlich Handhabungsweise, Genauigkeit seiner Meßergebnisse und nach Möglichkeit auch hinsichtlich seines Aufbaus zu vebessern und darüber hinaus universeller zu gestalten.

Entsprechend der Erfindung wurde diese Aufgabe gemäß dem Patentanspruch 1 dadurch gelöst, daß sich die Geophonanordnung auch in der zweiten Ebene erstreckt, die senkrecht zu der ersten Ebene orientiert ist, wobei auch die Geophonanordnung der zweiten Ebene in mindestens zwei Umfangswinkelpositionen jeweils ein Ausgangssignal erzeugt und diese beiden Ausgangsssignale eine entgegengesetzte Phasenanlage aufweisen. Hierdurch kann eine neutrale Umfangswinkelposition durch den Quotienten der Amplituden der Meßsignale bestimmt werden, welche auf beiden Seiten benachbart der neutralen Umfangswinkelposition in wirksamen Umfangswinkelpositionen der Geophonanordnung ermittelt werden.

Ein wesentlicher Vorteil der Erfindung besteht darin, daß diese sich nicht nur auf die Ermittlung des Azimuts beschränkt, sondern darüber hinaus bei der Ermittlung des Auftauch- bzw. Emergenzwinkels $\epsilon$ eines seismischen Strahls zu verwenden ist.

Außer den bevorzugten elektrodynamischen Geophonen können ggf. auch induktive, kapazitive oder Piezoelektrische Schwingungsmesser eingesetzt werden.

Vorteilhafte Ausgestaltungen der Erfindung sind Gegenstand der Unteransprüche.

Der Richtsensor kann grundsätzlich bei der Erfassung aller seismischen Wellen benutzt werden, wobei bei der Erfassung von Scherwellen (S-Wellen) selbstverständlich zu beachten ist, daß deren Schwingungsrichtung gegenüber den P-Wellen um 90° versetzt ist.

In den Zeichnungen ist die Erfindung anhand bevorzugter Ausführungsbeispiele näher dargestellt, hierbei zeigen,

Fig. 1 in schematischer Darstellung einen seismischen Richtsensor zur Bestimmung des Azimuts,

Fig. 2 in schematischer Darstellung einen seismischen Richtsensor zur Bestimmung des Azimuts und des Ermergenzwinkels,

Fig. 3 in schematischer Darstellung einen Bohrlochsensor zur Bestimmung des Azimuts oder des Emergenzwinkels,

Fig. 4 in schematischer Darstellung einen Bohrlochsensor, der sowohl die Bestimmung des Azimuts als auch die Bestimmung des Emergenzwinkels gestattet,

Fig. 5 in schematischer Darstellung einen seismischen Richtsensor für den Azimutbereich von 180° in Kompaktbausweise zur Bestimmung des Azimuts,

Fig. 6 in schematischer perspektivischer Darstellung einen motorisch drehangetriebenen Richtsensor zur Bestimmung des Azimuts,

Fig. 7 etwa eine Draufsicht gemäß dem mit VII bezeichneten Ansichtspfeil in Fig. 6,

Fig. 8 etwa eine Draufsicht gemäß dem mit VIII bezeichneten Ansichtspfeil in Fig. 6, und

Fig. 9 und 10 in schematischer Darstellung eine Verdeutlichung der Wirkungsweise des in Fig. 1 dargestellten Richtsensors zur Bestimmung des Azimuts,

Fig. 11 in schematischer Darstellung die Wiedergabe eines mit dem Richtsensor gemäß Fig. 1 ermittelten Meßschriebs bei einer einen Impuls darstellenden seismischen Schwingung.

Fig. 12 und 13 in schematischer Darstellung eine Verdeutlichung der Funktionsweise eines sowohl der Ermittlung des Azimuts als auch der Ermittlung des Emergenzwinkels dienenden Richtsensors gemäß Fig. 2, und

Fig. 14 die schematische Wiedergabe eines Doppelfächer-Richtsensors.

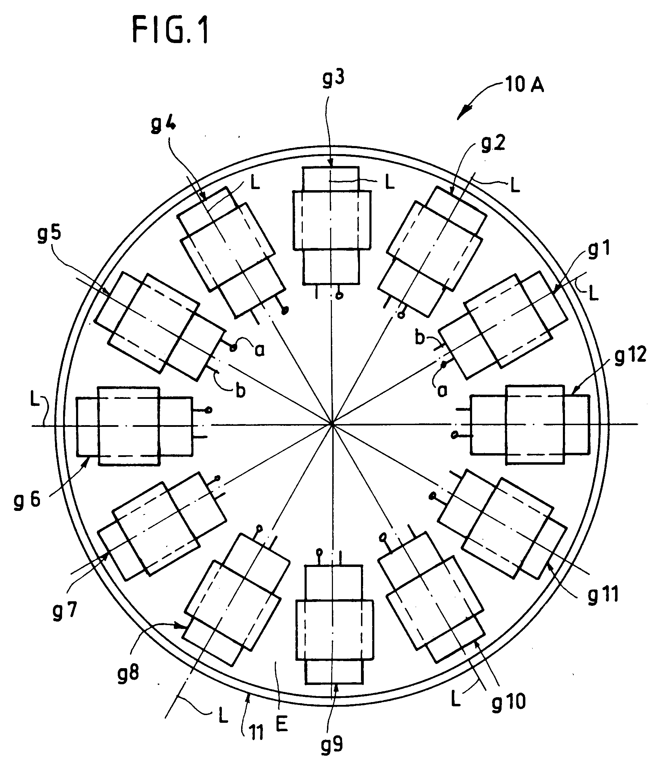

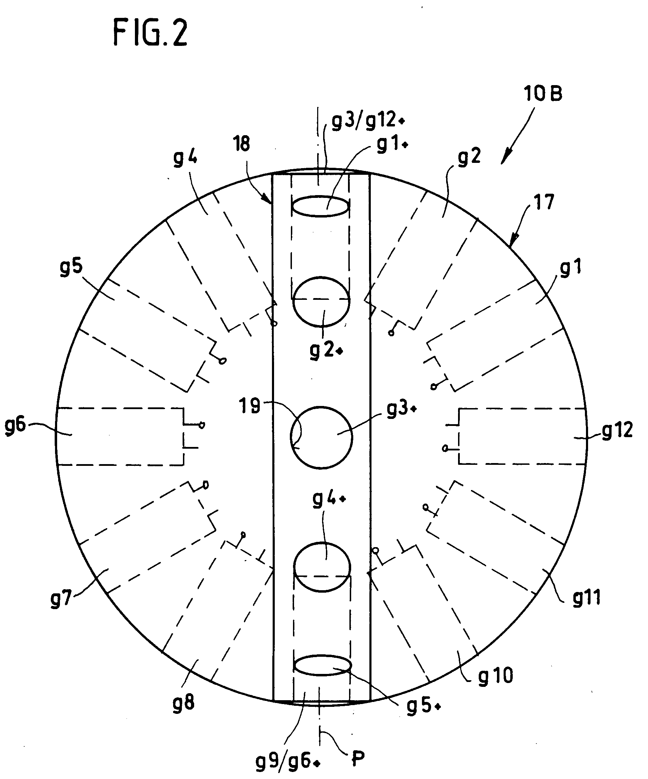

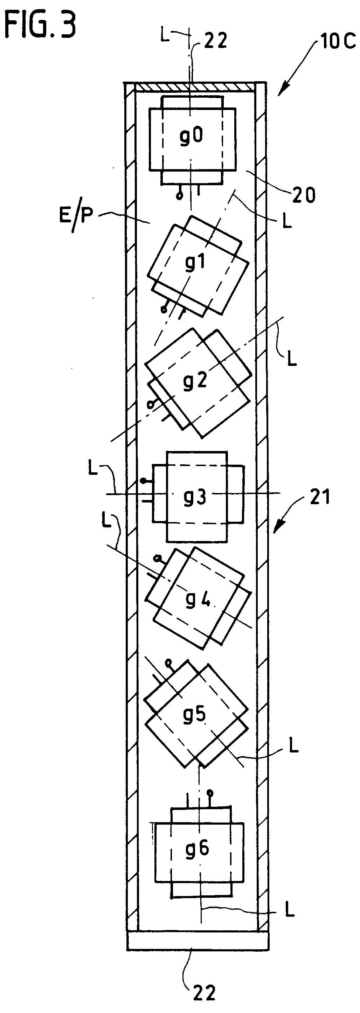

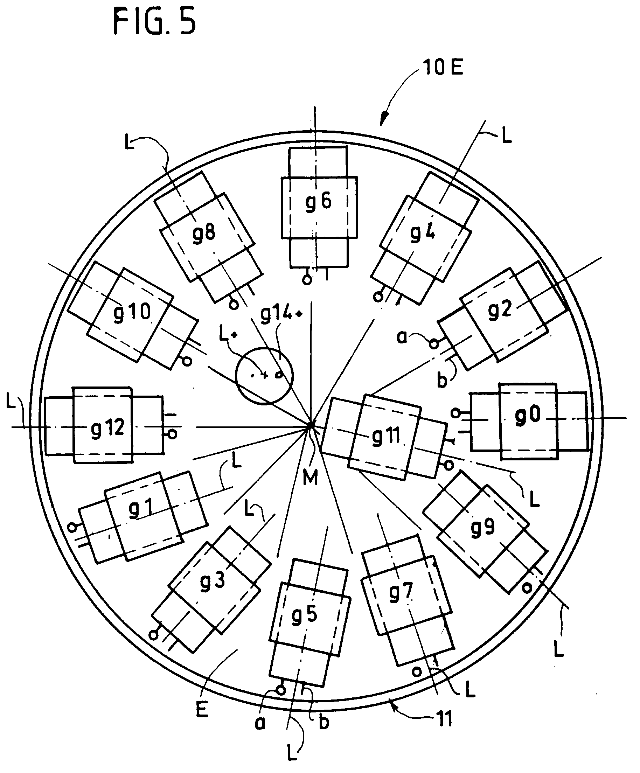

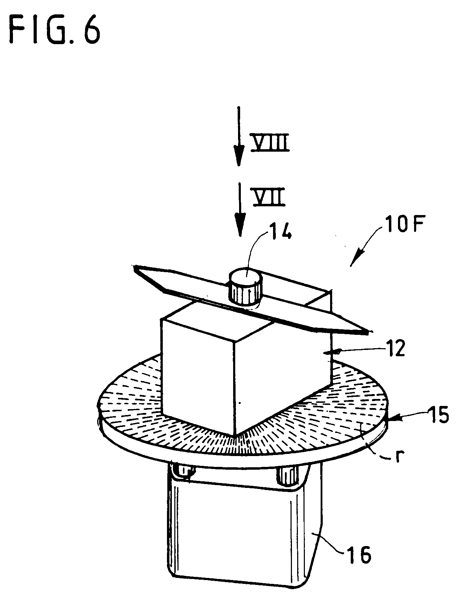

In den Zeichnungen tragen die unterschiedlich ausgeführten Richtsensoren die Bezeichnungen 10A (Fig. 1), 10B (Fig. 2) 10C (Fig. 3), 10D (Fig. 4), 10E (Fig. 5), 10F (Fig. 6 + 7) und 10H (Fig. 8).

Jedes Einzelgeophon ist grundsätzlich mit dem Buchstaben g bezeichnet, dem ggf. eine bestimmte Ziffer zugeordnet ist, welche die Reihenfolge des Geophons bezüglich seiner Umfangswinkelposition im Verhältnis zu den übrigen Geophonen angibt.

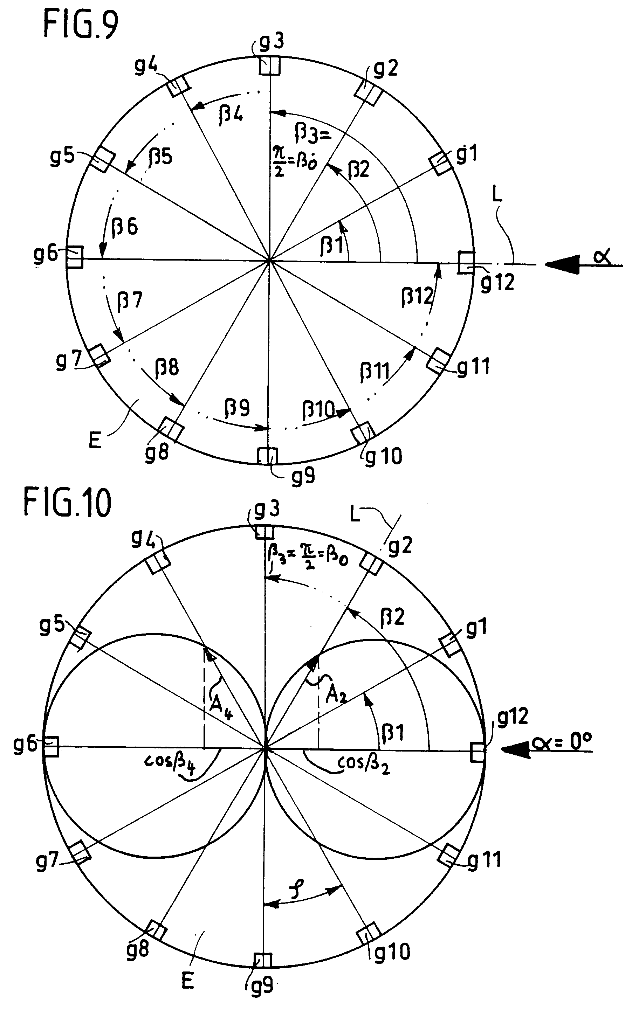

Zur Realisierung eines Richtsensors werden möglichst viele Geophone mit kreisförmiger Richtcharakteristik, z.B. zwölf ausgewählte 15-Hz-Geophone g1-g12, unter bestimmten Geophon-Schwingungsrichtungen reproduzierbar in mehreren Ebenen, insbesondere radialsymmetrisch, angeordnet. So sind Geophone g1-g12 mit gleichen Winkelabständen $\phi$ = 30° im Kreis angeordnet, wie dies anhand der Fig. 9 und 10 besonders deutlich wird.

Die den Figuren 9 und 10 entsprechende konkrete Ausgestaltung eines Richtsensors ist in Fig. 1 dargestellt.

Entsprechend den Fig. 1, 9 und 10 befinden sich alle Längsmittelachsen L der Geophone g1-g12 in derselben Ebene E, die gemäß Fig. 1 durch die ebene Kreisfläche einer kreisförmigen Montageplatte 11 gebildet ist.

Die Einzelgeophone g sind so beschaffen, daß sie entlang ihrer Längsmittelachsen L bei Auftreffen eines seismischen Strahls am empfindlichsten sind, d.h. die größte Schwingungsamplitude, somit das stärkste elektrische Signal, erzeugen. Gleichgerichtet mit der jeweiligen Längsachse L irgendeines Geophons g ist ein Winkelschenkel des jeweiligen Seismometer-Azimuts, welches allgemein mit $\beta$ bezeichnet ist (vgl. Fig. 9 und 10).

So sind beispielsweise dem Geophon g12 das Seismometer-Azimut $\beta_{12}$ und dem Geophon g8 das Seismometer-Azimut $\beta_8$ zugeordnet.

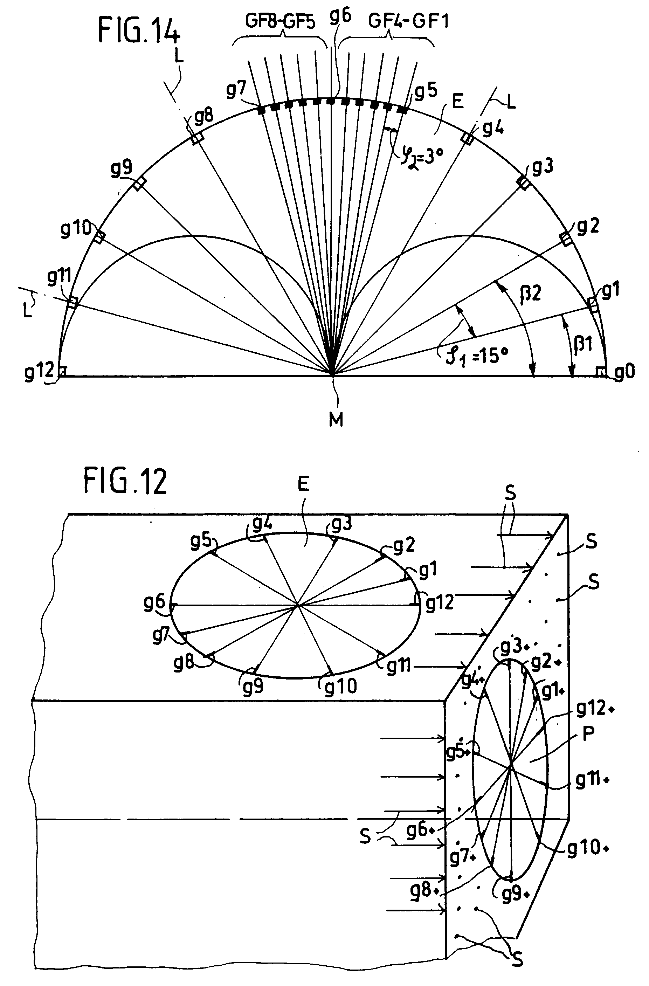

Das Azimut der Bodenschwingungen bzw. des seismischen Strahls ist gemäß Fig. 9 mit $\alpha$ bezeichnet, wobei eine Vielzahl gleichzeitig vorhandener Parallelstrahlen vorausgesetzt wird, wie z.B. in Fig. 12 im Zusammenhang mit einem anderen Ausführungsbeispiel angedeutet.

Anhand von Fig. 9 ist vorstellbar, daß die Einzelgeophone, deren Längsachsen L exakt parallel bzw. in der Richtung des seismischen Strahls mit dem Azimute $\alpha$ liegen, die größten Schwingungsamplituden aufweisen. Gemäß Fig. 9 handelt es sich hier um die Geophone g6 und g12 entsprechend den Seismometer-Azimuten $\beta_6$ und $\beta_{12}$. Anhand von Fig. 9 ist auch ohne weiteres vorstellbar, daß die Geophone g3 und g9, denen die Seismometer-Azimute $\beta_3$ und $\beta_9$ zugeordnet sind, sich mit ihren Längsachsen L in einer jeweils neutralen Umfangswinkelposition befinden, in welcher die Geophone bezüglich der quer zu den Längsachsen L auftretenden seismischen Strahlen nicht reagieren.

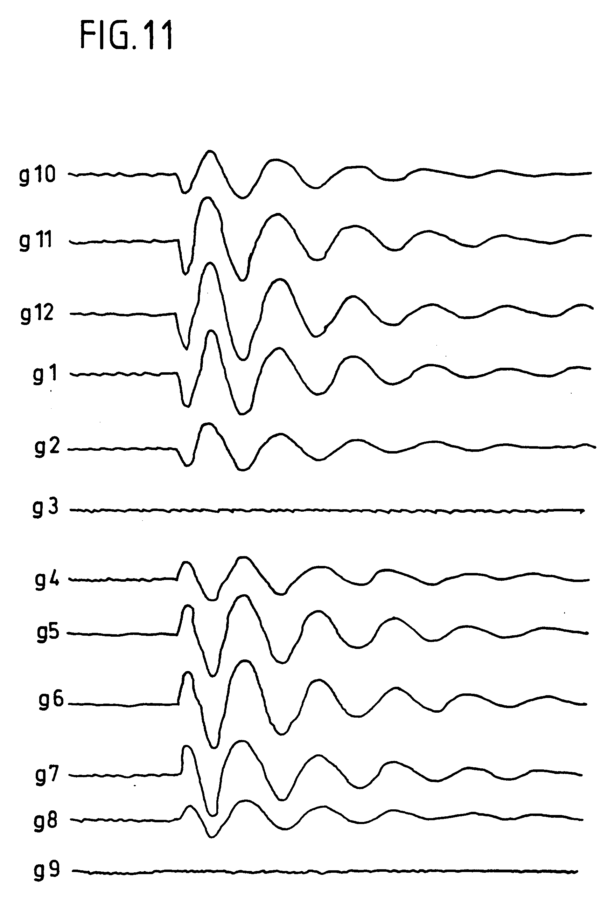

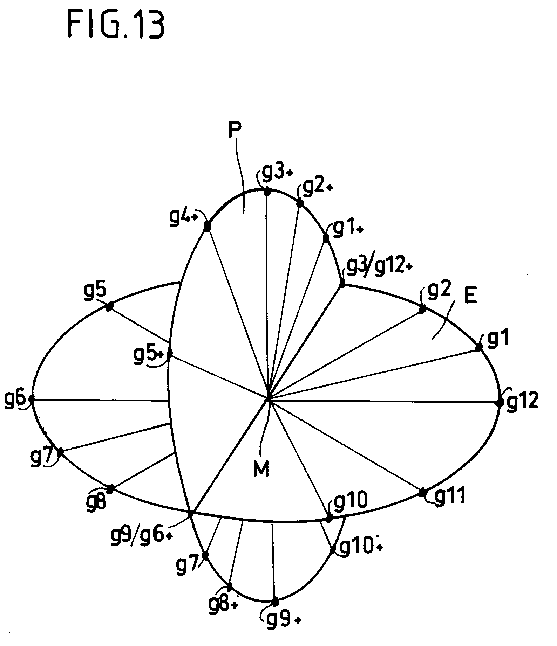

Ein Fig. 9 entsprechender Meßschrieb ist in Fig. 11 wiedergegeben. Hieraus wird deutlich, daß die Geophone g12 und g6 die größten Schwingungsamplituden verzeichnen, während die Geophone g3 und g9 praktisch nicht reagieren.

Diesen Effekt kann man nutzen, indem man sie zur Richtungsbestimmung eines seismischen Strahls mit dem Azimut $\alpha$ die Steile oder die Stellen ermittelt, an welcher oder an welchen ein Geophon oder mehrere Geophone bei Vorhanddensein seismischer Bodenschwingungen nicht reagieren. Diese Nullstellungen sind gemäß Fig. 9 den Geophonen g3 und g9 zuzuordnen, wobei die Richtung des seismischen Strahls im rechten Winkel zu deren Längsachsen L verläuft, die durch die Seismometer-Azimute $\beta_3$ und $\beta_9$ bestimmt sind.

Wie bei Betrachtung von Fig. 11 deutlich wird, sind die den Geophonen g3 und g9 Zuzuordnenden Nullstellen leicht aufzufinden, weil diese Nullstellen zugleich eine Phasenumkehr der Schwingungen einleiten. Die Meßspur bei g3 stellt demnach gewissermaßen eine Spiegel-Symmetrieebene für eine Kurvenschar dar. Die Phasenumkehr in den Nullstellen ist demnach ein besonders auffälliges, und daher leicht zu entdeckendes Merkmal. Eine Nullstelle ist deshalb sehr leicht optisch, z.B. durch Augenschein in einem Oszillogramm, zu bestimmen. Andererseits läßt sich eine solche Nullstelle auch mit einem verhältnismäßig geringen elektronischen Aufwand als eindeutiges Signal lokalisieren.

In Fig. 10 sind die Winkelbeziehungen und Winkelfunktionen der Geophone g1-g12 untereinander verdeutlicht. Für das Auftreten einer Nullstelle gilt

$$\beta_O = \alpha + \tfrac{\pi}{2} \text{ bzw. } \beta_o = \alpha + \tfrac{3}{2}\pi.$$

Für den Seismometer-Azimutabstand $\phi$ gilt allgemein

$$\phi = \beta_{n+1} - \beta_n.$$

Den Schwingungsamplituden ist der Buchstabe A zugeordnet. Hierbei gilt entsprechend dem dargestellten Beispiel

$$\frac{A_2}{A_4} = \frac{\cos \beta_2}{\cos \beta_4} \ .$$

Wenn

$$\frac{A_2}{A_4} = 1$$

ist, so ist

$$\frac{\cos \beta_2}{\cos \beta_4} = 1 \quad \text{und} \quad \beta_0 = \frac{\beta_2 + \beta_4}{2}$$

und damit das Azimut $\alpha = \beta_0 - \frac{\pi}{2} = 0$ Grad.

Auch bei gegenphasigen Amplituden anderer Geophonpaare läßt sich $\beta_0$, also somit auch $\alpha$, leicht aus den Werteverhältnissen errechnen bzw. tabellarisch ermitteln, so daß je nach Kanalwahl und gegenphasigen Geophonpaaren eine mehrfache Bestimmung den $\alpha$-Wert sichert.

Für die Ermittlung des Emergenzwinkels $\epsilon$ der im folgenden noch näher zu behandelnden Polebene wird sinngemäß in entsprechender Weise verfahren. Bei den praktischen Experimenten wurde eine Winkelgenauigkeit für $\Delta\alpha$ und $\Delta\epsilon = \leqq 1\,°$ erreicht.

Für sämtliche gezeigten Richtsensoren gilt, daß diese sehr genau arbeiten, weil die Amplitudenänderung $\Delta A$ in der Nähe der auffälligen Phasenumkehrbereiche wesentlich größer ist als im Amplitudenmaximumbereich. Auf diese Weise sind Azimut und Emergenzwinkel genauer zu ermitteln als entsprechend dem Stand der Technik, der sich vor allem des Amplituden-Maximumbereichs mit $\alpha = \beta$ bediente. So springt z.B. der Cosinuswert der Amplitude im Phasenumkehrpunkt bei $\beta_0 = 90\,°$ von 0,0000 auf 0,0523 bei einem $\Delta\beta$ um nur $3\,°$ auf $87\,°$, während im AmplitudenMaximumbereich der Cosinuswert für dieselbe $3\,°$-Änderung von 1,0000 (bei $0\,°$) auf nur 0,9986 abnimmt. Ein anderes Beispiel Bei einer Richtungsänderung eines seismischen Strahls von $2\,°$ (z.B. von $1\,°$ nach $3\,°$) beträgt die Änderung des Cosinuswertes der Amplitude im Phasenumkehrbereich 0,03491, während dagegen im Amplituden-Maximumbereich die Änderung des Cosinuswertes der Amplitude nur 0,00122 erreicht. Das bedeutet eine 28,6-fach höhere Amplitudenänderung im Phasensprungbereich als im $A_{max}$-Bereich (vgl. Fig. 10).

Im Zusammenhang der Zeichnungen, so auch der Fig. 1 sowie 9 und 10, sei noch ergänzt, daß die Anschlüsse a und b der Einzelgeophone g in elektrischer Hinsicht gleichphasig geschaltet sind.

Die Ebene E gemäß den Figuren 1 sowie 9 und 10 bildet zugleich die Äquatorebene für das jeweilige Azimut $\alpha$ bzw. $\beta$.

Die Ermittlung einer Nullstelle (z.B. bei g3 in Fig. 11) kann so geschehen, daß sämtliche Geophone g1-g12 mit der Montageplatte 11 gemäß Fig. 1 raumfest angeordnet und sämtliche Geophone gleichzeitig eingeschaltet sind. Hierbei würde sich der in Fig. 11 dargestellte Meßschrieb insgesamt zur selben Zeit ergeben. Eine derartige Vorgehensweise ist dann zweckmäßig, wenn das seismische Ereignis, wie in Fig. 11 gezeigt, eine Impulsschwingung (gedämpfte Schwingung) mit anfänglich großen und sodann abnehmenden Amplituden darstellt. Für den Fall, daß Bodenerschütterungen für relativ lange Zeiträume periodisch als gleichartige Impulsfolgen oder dauernd auftreten, ist es auch möglich, die Geophone g1-g12 gemäß Fig. 1 zum Beispiel aufeinanderfolgend zu aktivieren. In einem solchen Falle erhielte man analog zur Darstellung gemäß Fig. 11 entweder sinuslinienartige Meßspuren (ungedämpfter Schwingungsverlauf) oder Impulsseismogramme mit von Spur zu Spur unterschiedlichen Amplituden A. Hierbei würden, dasselbe Azimut $\alpha$ für den seismischen Strahl vorausgesetzt, die von den Geophonen g12 und g6 erzeugten Schwingungszüge die größten Amplituden aufweisen, während die Nullstellen sich wiederum bei g3 und g9 befänden.

Weiterhin ist es bemerkenswert, daß eine Geophonebene E nicht unbedingt die relativ große Anzahl von zwölf Einzelgeophonen aufweisen muß. Für die Ortung von periodisch auftretenden Bodenschwingungen oder Impulsserien genügt beispielsweise eine Geophonanordnung gemäß den Fig. 6-8.

Gemäß Fig. 7 weist der Richtsensor 10F ein Einzelgeophon g auf, während der Richtsensor 10H zwei Einzelgeophone g besitzt, die in einem festen Winkelabstand von $\phi = 5\,°$ angeordnet sind.

Die perspektivische Darstellung gemäß Fig. 6 zeigt den Richtsensor 10F mit nur einem Geophon g, also ein verhältnismäßig schmales Gehäuse 12, während das Gehäuse 13 des Richtsensors 10H gemäß Fig. 8 zur Aufnahme zweier Geophone g breiter ausgelegt sein muß. Hinsichtlich ihres Bauprinzips sind die Richtsensoren 10F und 10H aber im wesentlichen gleich. Und zwar sind die Gehäuse 12, 13 um die vertikale Achse 14 zentrisch und drehbar bezüglich einer mit Winkelradien r versehenen kreisrunden Platte 15 angeordnet. Die Platte 15 stützt sich auf dem Gehäuse 16 eines Schrittschaltmotors ab, welcher die Geophongehäuse 12 bzw. 13 in kleinen, konstanten Winkelschritten dreht. Auf diese Weise sind die Nullstellen analog zu Fig. 11 deutlich und mit großer Auflösung zu ermitteln, zumal ein solches als Drehgeophon ausgebildeter Richtsensor 10F bzw. 10H mit relativ kleinen Winkelschritten von beispielsweise $3,75\,°$ pro Schritt arbeitet.

Beide Gehäuse 12, 13 tragen je einen Zeiger 23, der z.B. das Azimut $\alpha$ eines seismischen Strahls anzeigt, wenn sich die Geophon-Längsachse L des Richtsensors 10F oder die Winkelhalbierende Wh zwischen den beiden Geophon-Längsachsen $L_1$, $L_2$ des Richtsensors 10H in ihrer neutralen Umfangswinkelposition befinden. Der Zeiger 23 erstreckt sich daher rechtwinklig zu L (Fig. 7) und Wh (Fig. 8).

Eine andere abweichende Anordnung von Geophonen innerhalb einer Ebene E ist in Fig. 14 dargestellt. Gemäß Fig. 14 sind 13 Einzelgeophone, d.h. die Geophone g1-g12, mit einem jeweiligen Winkelabstand von $\phi$ = 15° zentralsymmetrisch um den Mittelpunkt M angeordnet. In dem zentralen Bereich von 30° sind zusätzlich acht Geophone GF1-GF8 angeordnet, welche untereinander bzw. von den Geophonen g5, g6, und g7, einen Winkelabstand von $\phi$ = 3° aufweisen. Es ergibt sich so ein Richtsensor mit hoher Auflösung, wobei der Richtsensor zwei Auflösungsbereiche, einen Großfächer mit den Geophonen g0-g12 und einen Kleinfächer mit den Geophonen GF1-GF8 sowie g5-g7 aufweist. Auf diese Weise ergibt sich - vergleichbar der Fotografie - ein Sensor mit zwei "Brennweiten", wobei dem zentralen 30°-Fächer mit den Geophonen GF1-GF8 sowie g5-g7 praktisch die Wirkung eines Teleobjektivs und dem übrigen Bereich die eines Weitwinkelobjektivs zukommt.

Eine praktische Ausführungsform kann in gewisser Abwandlung des Ausführungsbeispiels gemäß Fig. 14 darin bestehen, daß sich der über einen Umfangswinkelbereich von 30° erstreckende Kleinfächer mit den Geophonen GF1-GF8 in nicht dargestellter Art in einer zweiten - zur Ebene E parallelen - Ebene angeordnet wird. Auf diese Weise lassen sich alle 21 Geophone gemäß Fig. 14 in einem Gehäuse von nur 2000 cm$^3$ unterbringen.

Ein seismischer Richtsensor entsprechend den Fig. 1, 9 und 10 kann mit seiner Ebene E auch in eine Vertikalposition versetzt werden kann, so daß aus der Äquatorebene eine Polebene zur Bestimmung des Emergenzwinkels $\epsilon$ eines seismischen Strahls wird. Entsprechend einer bevorzugten Ausführungsform der Erfindung gemäß den Fig. 2 sowie 12 und 13 weist ein dreidimensional arbeitender Richtsensor neben der Geophon-Aufstellungsebene E (Äquatorebene) auch eine hierzu orthogonal angeordnete weitere Ebene P (Polebene) auf. Eine kompakte Ausführungsform ergibt sich dann, wenn beide Kreisebenen einander zentralsymmetrisch durchdringen (Fig. 2 und 13).

In vielen anderen praktischen Fällen wird man statt der Erfassung des gesamten Vollraums (Fig. 2, Fig. 12 und 13) mit der Überdeckung eines Teilraumes (Halbkugelraum oder andere Teilkugelausschnitte) auskommen.

Zur Erläuterung der Wirkungs weise des Richtsensors stellt man sich den zu bestimmenden seismischen Strahl im Bereich der Meßstelle als Teil eines Parallelstrahlenbündels mit ebenen Wellenfronten - wie in der Optik - vor. Gemäß Fig. 12 sind diese Strahlen als Pfeile eingezeichnet und mit S bezeichnet. Die Anordnung der Geophone in zwei zueinander senkrecht stehenden Ebenen E und P gemäß Fig. 12 ergibt eine Vollraum- oder Kugelsonde. Die Einzelgeophone der Äquatorebene E entsprechen grundsätzlich den Darstellungen in den Fig. 1 sowie 9 und 10. Die Geophone g1-g12 dienen daher der Ermittlung des Azimuts $\alpha$, während die in der Polebene P befindlichen Geophone g1+ bis g12+ der Ermittlung des Emergenzwinkels $\epsilon$ dienen, der gemäß Fig. 12 = Null ist, wenn das seismische Strahlenbündel senkrecht auf die Polebene P trifft.

Wenn man die beiden Kreisebenen E und P gemäß Fig. 12 einander durchdringen läßt und bezüglich eines gemeinsamen Mittelpunktes M oder einer gemeinsamen Achse zentral anordnet, können von den gemäß Fig. 12 ansonsten erforderlichen 24 Geophonen zwei Geophone eingespart werden, da die Geophone g3 und g9 der Äquatorebene E zugleich die Funktion der Geophone g6+ und g12+ der Polebene P übernehmen.

Die vorrichtungsmäßige Ausführung der in Fig. 13 schematisch gezeigten Ausführung ergibt sich durch Fig. 2. Zwei orthogonal zueinanderstehende Kreisscheiben 17 (für die Äquatorebene E) und 18 (für die Polebene P) nehmen die Geophone in Aufnahmebohrungen 19 auf.

Es ist leicht zu ersehen, daß man Einzelgeophone so im Parallelstrahlenbündel (vgl. Fig. 12) anordnen kann, als wären sie in einer bestimmten Reihenfolge, z.B. auf einer fiktiven Kreisebene, radialsymmetrisch mit gleichen Umfangswinkelabständen auf einem Vollkreis angebracht, so daß das System die gewünschte kreisförmige Richtcharakteristik für eine betreffende Ebene (Äquatorebene E oder Polebene P) aufweist. Auf diese Weise lassen sich je nach Anwendungsziel Richtsensoren mit Kugelsonden- bzw. Vollraumcharakteristik oder Teilraumsonden mit Fächeranordnung in zylindrischen, quaderförmigen, kugelförmigen oder ähnlichen Gehäusen unterbringen.

So kann die Äquatorebene E z.B. für 12 Geophone mit einem Azimutabstand $\phi$ = 30° in drei kleinen, um je 30° gegeneinander versetzten, übereinander gestapelten Teilebenen mit je 90° Geophonabstand auf jeder Teilebene aufgebaut sein (nicht dargestellt). Die Polebene P wird dabei in zwei kleine parallele Teilebenen aufgeteilt, auf denen die Geophone mit $\phi$ = 30° Winkelabstand ebenfalls in der Reihenfolge so aufgebaut sind, daß die sich hieraus ergebende Polebene P eine kreisförmige Richtcharakteristik aufweist.

Hierzu wird auf den in Fig. 4 dargestellten Bohrlochsensor verwiesen.

Der Bohrlochsensor 10D gemäß Fig. 4 weist einen oberen Bereich mit einer radialen Montageplatte 20 auf, welche beiderseits (nur eine Montageplattenseite ist dargestellt) je fünf Geophone g+ trägt, deren Längsachsen L so angeordnet sind, daß alle zehn Geophone g+ (wiederum unter der Voraussetzung eines Parallelstrahlenbündels) eine vertikal angeordnete, die Polebene P definierende Kreisscheibe analog zur Kreisscheibe 18 gemäß Fig. 2 substituieren können. Demnach sind die zehn Geophone g+ in einem Winkelabstand $\phi = 30°$ voneinander angeordnet. Die Geophone g+ im oberen Bereich des Bohrlochsensors 10D dienen demnach der Ermittlung des Emergenzwinkels $\epsilon$, während die im unteren Bereich des Bohrlochsensors 10D auf einem Kreiszylinder um dessen Zylinderachse MA umfangsverteilt und höhenversetzt angeordneten zwölf Geophone g (wiederum unter der Voraussetzung eines Parallelstrahlenbündels) eine zentralsymmetrische Anordnung (vgl. Fig. 1) substituieren. Die Geophone g dienen demnach der Ermittlung des Azimuts $\alpha$. Die Geophone g3 und g9 der Äquatorebene E übernehmen hierbei wieder zugleich die Funktion der Geophone g6+ und g12+ der Polebene P wie in Fig. 12.

Ergänzend muß noch erwähnt werden, daß die gemäß Fig. 4 beschriebene Anordnung für seigere Bohrlöcher anzuwenden ist. Der Bohrlochsensor 10D kann selbstverständlich auch für horizontale Bohrlöcher eingesetzt werden, wobei aus der Ebene E die Ebene P (und umgekehrt) entstehen würde.

Fig. 3 zeigt einen Bohrlochsensor, z.B. für Flözwellenuntersuchungen, mit sieben Geophonen g0-g6 für einen 180°-Fächer mit $\phi = 30°$ auf einer Montageplatte 20. Je nach Drehung und Lage im Bohrloch kann dieser Bohrlochsensor 10C als Äquatorebene E oder als Polebene P reagieren.

Eine kompakte Bauweise eines zur Bestimmung des Azimuts $\alpha$ vorgesehenen Richtsensors 10E zeigt Fig. 5. Die Längsachsen L der Geophone g0-g12 in der Äquatorebene E sind so angeordnet, als würden sich sämtliche Geophone auf einer Halbkreislinie größeren Durchmessers befinden. Der Richtsensor 10E bildet daher nur einen Fächer bzw. Azimutbereich von 180°.

Das angedeutet dargestellte Geophon g14+ erstreckt sich mit seiner Längsachse L+ orthogonal zur Ebene E. Das Geophon g14+ dient der Ermittlung einer etwaigen Querkomponente eines seismischen Strahls. Alle vorbeschriebenen Bohrlochsensoren 10C (Fig. 3), 10D (Fig. 4) und 10E (Fig. 5) weisen kreiszylindrische Gehäuse 21 und diesbezügliche Deckel 22 zur Herstellung einer flüssigkeitsdichten Anordnung auf.

Für die Durchführung von Messungen und die notwendigen Auswertungen mit den vorbeschriebenen Richtsensoren stehen verschiedenartige Einrichtungen je nach Art der Bodenschwingungen und der zur Verfügung stehenden Kanalzahl (Anzahl der Geophone g) bereit. Die Signale aller Einzelgeophone g in den beschriebenen Vielkanalsensoren sollten mit getrennten zweiadrigen Leitungen oder über entsprechende drahtlose Fernübertragung am Registrier- bzw. Auswertegerät zur Verfügung stehen, damit eine vielseitige Bearbeitung erfolgen kann. Dann lassen sich verschiedenartige Kombinations- und Auswahlschaltungen vornehmen.

Die gezeigten Richtsensoren sind besonders gut geeignet für Untersuchungen auch im Infraschallbereich bis herab zu 1 Hz zur Messung, Überwachung und Ortung von seismischen Ereignissen aller Art.

Wichtig für das Funktionieren aller Richtsensoren - wie bereits weiter oben erwähnt - ist die Einhaltung derselben Polung a, b aufeinanderfolgender Geophone g. Außerdem ist es zweckmäßig, beide Pole a, b aus jedem Geophon herauszuführen, mit der Möglichkeit, jedes einzelne Geophon g selektiv abfragen zu können.

Zur Ortung des Epizentrums einer seismischen Quelle mit den beschriebenen Richtsensoren läßt sich das Azimut $\alpha$ bzw. der Richtstrahl von einem Meßpunkt aus recht genau und relativ einfach - wie beschrieben - ermitteln. Mit einem zweiten Richtsensor an einem zweiten Meßpunkt, der vom ersten im entsprechenden Abstand steht, wird ein zweiter Richtstrahl ermittelt; der Schnittpunkt der beiden Richtstrahlen gibt dann nach Art eines Vorwärtsanschnittes aus der Feldmeßtechnik den Ort des Epizentrums der seismischen Quelle an.

Wie in der Seismologie üblich, läßt sich aus dem Seismogramm der am Meßpunkt eintreffenden Bodenschwingungen die Entfernung zwischen Meßpunkt und seismischer Quelle auch aus den Laufzeitunterschieden der P- und S-Welle ermitteln. Bei Anwendung dieses Verfahrens benötigt man für die Ortung der seismischen Quelle nur einen Richtsensor.

Die Anwendung der Erfindung ermöglicht eine besonders einfachen Richtungsbestimmung für einen seismischen Strahl (Azimut $\alpha$ und Auftauchwinkel $\epsilon$) aus dem Verhältnis bzw. durch den Quotienten gegenphasiger Amplituden von Geophonpaaren. Bei der technischen Ausführung des Richtsensors wirken sich Kleingeophone mit zuverlässiger kreisförmiger Richtcharakteristik günstig aus. So wird z.B. mit Kleingeophonen (Eigenfrequenz 15 Hz) in Verbindung mit digitalen Filtern, rauscharmen Verstärkern, Rechnern mit Speichern und modernen Registriereinrichtungen (z.B. Transienten-Recordern mit Bildschirmdarstellung und Schnelldruckern) ein Meßfrequenzbereich von ca. 1-1000 Hz mit hoher Zeitauflösung überdeckt. (vgl. Hummel, D.: Das neue Schwingungsmeßgerät der WASAGCHEMIE Sythen GmbH vom Typ ZEB/SM-8K für alle vorkommenden Frequenzbereiche, Nobelhefte 1989, 2/3, S.98-103). Diese Registriereinrichtungen sind für die oben beschriebenen notwendigen Phasenmessungen und Amplitudenverhältnisse des Richtsensors sehr gut geeignet. Bei hörbaren Bodenschallfrequenzen kann man natürlich auch das gegenphasige Amplitudenminimum akustisch - nach Art der elektrischen Minimum-Peilung mit Peilrahmenantenne - über Kopfhörer oder Lautsprecher ermitteln.

Zum Richtsensor 10B gemäß Fig. 2 ist noch folgendes nachzutragen: Ist der Richtsensor 10B mit seinen beiden Ebenen E und P im Raum gegen eine kreisförmige, mit Gradeinteilung versehene, horizontale Bezugs- bzw. Grundebene (nicht dargestellt) geneigt, so wird bei einem schräg einfallenden seismischen Strahl z.B. für die Azimutbestimmung $\alpha$ diejenige Schnittlinie einer gedachten Ebene mit dem Grundkreis maßgebend, die sich durch die beiden ermittelten $\beta_o$ in der Äquatorebene E und dem gemeinsamen Sonden-Mittelpunkt M (vgl. Fig. 13) ergibt; das gilt wiederum entsprechend für die $\epsilon$-Bestimmung.

**Patentansprüche**

1. Richtsensor für Bodenschall mit einer mindestens einer ersten Ebene (E) zugeordneten, elektrische Ausgangssignale liefernden Geophonanordnung (g1 - g12) ausgeprägter Richtcharakteristik, welche in mindestens zwei Umfangswinkelpositionen (bei L) jeweils ein Ausgangssignal erzeugt und diese beiden Ausgangssignale eine entgegengesetzte Phasenlage aufweisen, wobei sich die Geophonanordnung (g1 + - g12 +) auch in einer zweiten Ebene (P) erstreckt, die senkrecht zu der ersten Ebene (E) orientiert ist, wobei auch die Geophonanordnung (g1 + - g12 +) der zweiten Ebene (P) in mindestens zwei Umfangswinkelpositionen (bei L) jeweils ein Ausgangssignal erzeugt und diese beiden Ausgangssignale eine entgegengesetzte Phasenlage aufweisen.

2. Richtsensor nach Anspruch 1, dadurch gekennzeichnet, daß die die Äquatorebene (E) darstellenden Umfangswinkelpositionen (L von g1 bis g12) der Bestimmung des Azimuts ($\alpha$), und die die Polebene (P) darstellenden Umfangswinkelpositionen (L von g1 + bis g12 +) der Bestimmung des Auftauch- bzw. Emergenzwinkels ($\epsilon$) des seismischen Strahls dienen (Fig. 2, 12, 13).

3. Richtsensor nach Anspruch 1 oder nach Anspruch 2, dadurch gekennzeichnet, daß zwei senkrecht zueinanderstehende Kreisebenen (P, E) einen gemeinsamen Mittelpunkt (M) aufweisen (Fig. 2 und 13).

4. Richtsensor nach einem der vorangehenden Ansprüche, dadurch gekennzeichnet, daß die Umfangswinkelpositionen (L von g, Fig. 4) radial zu mindestens einer geraden Achse (MA) in zueinander parallelen Ebenen versetzt angeordnet sind (Fig. 4).

5. Richtsensor nach einem der vorangehenden Ansprüche, dadurch gekennzeichnet, daß die Umfangswinkelpositionen (L von g) mindestens einer gleichmäßigen Winkelteilung folgen.

6. Richtsensor nach Anspruch 5, dadurch gekennzeichnet, daß zusätzlich zu einer großen Winkelteilung (g0 bis g12) eine insbesondere fächerförmige kleinere Winkelteilung (bei GF1 bis GF8) der Umfangswinkelpositionen (bei L)vorhanden ist (Fig. 14).

7. Richtsensor nach einem der vorangehenden Ansprüche, dadurch gekennzeichnet, daß jede Umfangswinkelposition (bei L) in an sich bekannter Weise von einem gesonderten Geophon (g) besetzt ist.

8. Richtsensor nach einem der vorangehenden Ansprüche, dadurch gekennzeichnet, daß eine Anzahl von Einzelgeophonen (g +; g0 bis g6) z.B. entlang einer Bezugsgeraden, z.B. auf einer von einer ebenen Platte (20) gebildeten Montagefläche (E bzw. P), angeordnet sind, und zwar entsprechend ihren in einer Kreisebene befindlichen Umfangswinkelpositionen ihrer Längsmittelachsen (L) - (Fig. 3 und 4) -.

9. Richtsensor nach Anspruch 8, dadurch gekennzeichnet, daß eine Anzahl von Geophonen (g +; g0 bis g6) beiderseits einer Montageplatte (20) angeordnet ist, wobei die Längsachsen (L) der Geophone auf der jeweiligen Plattenseite sich in einer gemeinsamen Ebene (E, P) befinden (Fig. 3 und 4).

10. Richtsensor nach einem der Ansprüche 1 bis 7, dadurch gekennzeichnet, daß eine Anzahl von Geophonen (g) mit ihren Längsmittelachsen (L) radial zur Längsmittelachse (MA) eines geraden Kreiszylinders (21) in verschiedenen zueinander parallelen Radialebenen angeordnet sind.

11. Richtsensor nach einem der Ansprüche 8 bis 10, dadurch gekennzeichnet, daß eine mit Geophonen (g+) besetzte Montageplatte (20) und ein Geophone (g) enthaltender gerader Kreiszylinderkörper (21) gemeinsam eine, eine Polebene (P) und eine Äquatorebene (E) aufweisende, Geophonsonde (10D), z.B Bohrlochsonde, bilden (Fig. 4).

12. Richtsensor nach einem der vorangehenden Ansprüche, dadurch gekennzeichnet, daß die Geophone (g) in der Folge nacheinander oder in beliebiger Reihenfolge einzeln oder in Gruppen einschaltbar sind.

13. Richtsensor nach einem der vorangehenden Ansprüche, gekennzeichnet durch eine Drehbarkeit einer Kreisanordnung um deren Zentrum (14) - (Fig. 6-8) -.

14. Richtsensor nach einem der vorangehenden Ansprüche, dadurch gekennzeichnet, daß die neutrale Umfangswinkelposition (L von g; Wh von $L_1$ und $L_2$) mittels nur zweier wirksamer Geophon-Umfangswinkelpositionen unmittelbar benachbart der neutralen Umfangswinkelposition bestimmt wird (Fig. 6 bis 8).

15. Richtsensor nach einem der vorangehenden Ansprüche, dadurch gekennzeichnet, daß jeder Kreisanordnung nur ein in deren einzelne Umfangswinkelpositionen (L) hineinbewegbares Geophon (g)-zugeordnet ist (Fig. 6 und 7).

16. Richtsensor nach einem der vorangehenden Ansprüche, dadurch gekennzeichnet, daß nur zwei in einer Ebene, vorzugsweise nur einen kleinen Umfangswinkel ($\phi$) von z.B. 5° miteinander bildende Geophone (g) in die einzelnen Umfangswinkelpositionen hineinbewegbar sind (Fig. 8).

17. Richtsensor nach Anspruch 16, dadurch gekennzeichnet, daß mindestens ein Geophon (g) mit seiner Längsachse (L; $L_1$, $L_2$) zentralsymmetrisch drehfest quer auf einer Welle (14) angeordnet und mittels eines Schrittmotors (bei 13) antreibbar ist.

**Claims**

1. Directional sensor for solid-borne sound with a geophone arrangement (g1 - g12) of a pronounced directional characteristic assigned to at least one plane (E) and supplying electrical output signals, which produces an output signal respectively in at least two angle at circumference positions (at L) and these two output signals have an opposed phase relation, the geophone arrangement (g1+ - g12+) extending also in a second plane (P), which is oriented vertically to the first plane (E), the geophone arrangement (g1+ - g12+) of the second plane (P) also producing an output signal respectively in at least two angle at circumference positions (at L) and these two output signals having an opposed phase relation.

2. Directional sensor according to claim 1, characterized in that the angle at circumference positions (L of g1 to g12) representing the equatorial plane (E) are used to determine the azimuth ($\alpha$), and the angle at circumference positions (L of g1+ to g12+) representing the polar plane (P) are used to determine the angle of emergence ($\epsilon$) of the seismic ray (Fig. 2, 12, 13).

3. Directional sensor according to claim 1 or claim 2, characterized in that two circular planes (P, E) perpendicular to one another have a common centre point (M) (Fig. 2 and 13).

4. Directional sensor according to any one of the preceding claims, characterized in that the angle at circumference positions (L of g, Fig. 4) are arranged radially to at least one straight axis (MA) displaced in planes parallel to one another (Fig. 4).

5. Directional sensor according to any one of the preceding claims, characterized in that the angle at circumference positions (L of g) follow at least one equal subdivision of an angle.

6. Directional sensor according to claim 5, characterized in that in addition to a large subdivision of an angle (g0 to g12), an especially fan-shaped smaller subdivision of an angle (in the case of GF1 to GF8) of the angle at circumference positions (at L) exists (Fig. 14).

7. Directional sensor according to any one of the preceding claims, characterized in that each angle at circumference position (at L) is occupied in a known manner by a separate geophone (g).

8. Directional sensor according to any one of the preceding claims, characterized in that a number of individual geophones (g + ; g0 to g6) are arranged for example along a straight reference line, e.g. on a mounting surface (E or P) formed by a flat plate, to be precise corresponding to their angle at circumference positions of their longitudinal centre lines (L) located in a circular plane (Fig. 3 and 4).

9. Directional sensor according to claim 8, characterized in that a number of geophones (g + ; g0 to g6) is arranged on either side of a mounting plate (20), the longitudinal axes (L) of the geophones on each side of the plate being located in a common plane (E, P) (Fig. 3 and 4).

10. Directional sensor according to any one of claims 1 to 7, characterized in that a number of geophones (g) is arranged with their longitudinal centre lines (L) radially to the longitudinal centre line (MA) of a straight circular cylinder (21) in different radial planes parallel to one another.

11. Directional sensor according to any one of claims 8 to 10, characterized in that a mounting plate (20) fitted with geophones (g + ) and a straight circular cylindrical body (21) containing geophones (g) together form a geophone probe (10D) e.g. a borehole probe, with a polar plane (P) and an equatorial plane (E) (Fig. 4).

12. Directional sensor according to any one of the preceding claims, characterized in that the geophones (g) can be turned on in sequence after one another or in any sequence individually or in groups.

13. Directional sensor according to any one of the preceding claims, characterized by a rotatability of a circular arrangement about its centre (14) (Fig. 6 - 8).

14. Directional sensor according to any one of the preceding claims, characterized in that the neutral angle at circumference position (L of g; Wh of $L_1$ and $L_2$) is determined by means of only two effective geophone angle at circumference positions directly adjacent to the neutral angle at circumference position (Fig. 6 to 8).

15. Directional sensor according to any one of the preceding claims, characterized in that assigned to each circular arrangement is only one geophone (g) movable into individual angle at circumference positions (L) of the arrangement (Fig. 6 and 7).

16. Directional sensor according to any one of the preceding claims, characterized in that only two geophones (g) in a plane, preferably forming only a small angle at circumference ($\phi$) of e.g. 5° with one another are movable into the individual angle at circumference positions (Fig. 8).

17. Directional sensor according to claim 16, characterized in that at least one geophone (g) is arranged with its longitudinal axis (L; $L_1$; $L_2$) centrosymmetrically and to resist torsion transversely on a shaft (14) and is drivable by means of a stepping motor (in the case of 13).

**Revendications**

1. Capteur directionnel pour bruit de sol, avec au moins un dispositif géophonique (g1 à g12), associé à un premier plan (E), envoyant des signaux de sortie électrique et présentant une caractéristique directionnelle accentuée, produisant en au moins deux positions angulaires sur un périmètre (en L) chaque fois un signal de sortie et ces deux signaux de sortie étant en opposition de phase, l'agencement géophonique (g1 + à g12 + ) s'étendant également dans un deuxième plan (P), orienté perpendiculairement par rapport au premier plan (E), l'agencement géophonique (g1 + à g12 + ) du deuxième plan (P) produisant, en au moins deux positions angulaire sur un périmètre (en L), chaque fois un signal de sortie et ces deux signaux de sortie étant en opposition de phase.

**2.** Capteur directionnel selon la revendication 1,
caractérisé en ce que les positions angulaires sur un périmètre (L de g1 à g12), constituant le plan équatorial (E), servent à la définition de l'azimut ($\alpha$), et les positions angulaires sur un périmètre (L de g1 + à g12 +), constituant le plan polaire (P), servent à la détermination de l'angle de sortie, respectivement d'émergence ($\epsilon$) du rayon sismique (figure 2, 12, 13).

**3.** Capteur directionnel selon la revendication ou selon la revendication 2,
caractérisé en ce que deux plans à cercle inscrit (P, E), placés perpendiculairement entre eux, présentent un centre (M) commun (figure 2 et figure 13).

**4.** Capteur directionnel selon l'une des revendications précédentes,
caractérisé en ce que les positions angulaires sur un périmètre (L de g, figure 4) sont disposées radialement décalées dans des plans parallèles, par rapport à au moins un axe droit (MA) (figure 4).

**5.** Capteur directionnel selon l'une des revendications précédentes,
caractérisé en ce que les positions angulaires sur un périmètre (L de g) suivent au moins une division angulaire régulière.

**6.** Capteur directionnel selon la revendication 5,
caractérisé en ce qu'en plus d'une division angulaire avec de grands angles (gO à g12) existe une division angulaire plus fine (GF1 à GF8), en particulier en éventail, des positions angulaires sur un périmètre (en L) (figure 14).

**7.** Capteur directionnel selon l'une des revendications précédentes,
caractérisé en ce que chaque position angulaire sur un périmètre (en L) est occupée de manière connue par un géophone (g) séparé.

**8.** Capteur directionnel selon l'une des revendications précédentes,
caractérisé en ce qu'une pluralité de géophones individuels (g +; g0 à g6) sont disposés, par exemple le long d'une droite de référence, par exemple sur une surface de montage (E respectivement F) formée par une plaque (20) plane, notamment en fonction des positions angulaires sur un périmètre, se trouvant dans le plan d'un cercle inscrit, de leurs axes longitudinaux (L) - (figures 3 et 4) -.

**9.** Capteur directionnel selon la revendication 8,
caractérisé en ce qu'une pluralité de géophones ( g +; g0 à g6) est disposée des deux côtés d'une plaque de montage (20), les axes longitudinaux (L) des géophones se trouvant sur le côté respectif de la plaque, dans un plan commun (E, P), (figures 3 et 4).

**10.** Capteur directionnel selon l'une des revendications 1 à 7,
caractérisé en ce qu'une pluralité de géophones sont disposés avec leurs axes longitudinaux (L) orientés radialement par rapport à l'axe longitudinal (MA) d'un cylindre droit à section circulaire (21), dans des plans radiaux parallèles différents.

**11.** Capteur directionnel selon l'une des revendications 8 à 10,
caractérisé en ce qu'une plaque de montage (20) munie de géophones (g +) et un corps cylindrique à section circulaire (21) rectiligne, contenant un géophone (g), forment conjointement une sonde géophonique (10D) présentant un plan polaire (P) et un plan équatorial (E), par exemple une sonde de carottage ou diagraphie (figure 4).

**12.** Capteur directionnel selon l'une des revendications précédentes,
caractérisé en ce que les géophones (g) peuvent être mis en circuit, individuellement ou en groupe, en se suivant les uns les autres ou selon un ordre de succession quelconque.

**13.** Capteur directionnel selon l'une des revendications précédentes,
caractérisé par une mobilité en rotation d'un agencement en cercle, autour de son centre (14) - (figures 6 à 8).

**14.** Capteur directionnel selon l'une des revendications précédentes,
caractérisé en ce que la position angulaire sur un périmètre, neutre (L de g; Wh de $L_1$ et $L_2$) est déterminée au moyen seulement des positions angulaires, sur un périmètre, de deux géophones actifs, au voisinage direct de la position angulaire sur un périmètre, neutre (figures 6 à 8).

**15.** Capteur directionnel selon l'une des revenrevendications précédentes,
caractérisé en ce qu'à chaque agencement en cercle n'est associé qu'un géophone (g) susceptible d'être déplacé dans ses positions angulaires sur un périmètre (1) individuelles (figures 6 et 7).

**16.** Capteur directionnel selon l'une des revendications précédentes,
caractérisé en ce que seuls deux géophones (g), situés dans un plan, faisant ensemble de préférence seulement un petit angle de périmètre ($\phi$), de par exemple 5°, sont déplaçables dans les différentes positions angulaires sur un périmètre (figure 8).

**17.** Capteur directionnel selon la revendication 16,
caractérisé en ce qu'au moins un géophone (g) est disposé, assujetti en rotation, orienté transversalement par rapport à un arbre (14), avec son axe longitudinal (L; $L_1$, $L_2$) répondant à une symétrie par rapport à un point central, et pouvant être entraîné au moyen d'un moteur pas à pas (en 13).

EP 0 448 680 B1

# FIG.1

# FIG.2

FIG.3

# FIG.4

# FIG. 5

# FIG. 6

FIG.7

FIG.8

FIG.9

FIG.10

## FIG.11

# FIG.13

FIG.14

FIG.12